Europäisches Patentamt

European Patent Office

Office européen des brevets

(11) Veröffentlichungsnummer: **0 086 859**
**A1**

## (12) EUROPÄISCHE PATENTANMELDUNG

(21) Anmeldenummer: **82101371.1**

(22) Anmeldetag: **24.02.82**

(51) Int. Cl.³: **C 03 B 5/18**
**C 03 B 5/193, C 03 B 5/225**
**C 03 B 5/00**

(43) Veröffentlichungstag der Anmeldung:
**31.08.83 Patentblatt 83/35**

(84) Benannte Vertragsstaaten:
**AT BE CH DE FR GB IT LI NL SE**

(71) Anmelder: **Sorg GmbH & Co. KG**
**Im Aller 23**
**D-8770 Lohr/Main(DE)**

(72) Erfinder: **Pieper, Helmut**
**Buchenstrasse 19**
**D-8770 Lohr / Main(DE)**

(74) Vertreter: **Schulze Horn, Stefan, Dipl.-Ing. et al,**
**Patentanwälte Dipl.-Ing. S. Schulze Horn M.SC. Dr. H.**
**Hoffmeister Goldstrasse 36**
**D-4400 Münster(DE)**

(54) Verfahren zum Schmelzen von Glas und Glasschmelzofen zur Durchführung dieses Verfahrens.

(57) Verfahren zum Schmelzen von Glas, bei welchem Gemenge auf ein Glasbad aufgegeben wird und aufschmilzt, dann das Glass geläutert und homogenisiert und danach durch einen Auslaß abgezogen wird, wobei in der Schmelzzone des Glasbades vertikale Umlaufströmungen eingestellt werden und das Glas vor der Läuterung in einer Schicht geringer Tiefe von der Schmelzzone in die Läuterzone strömt sowie einen Glasschmelzofen zur Durchführung dieses Verfahrens, bestehend aus von einer Stahlverankerung gehaltenem Feuerfestmaterial, welches einen Schmelz- sowie einen Läuter- und Homogenisierungsteil und einen Flachteil zwischen beiden bildet, wobei der Boden des Schmelzteils dabei so ausgebildet ist, daß sich über ihn eine Strömung ausbildet, die der Entnahmeströmung entgegengesetzt ist.

Fig. 1

EP 0 086 859 A1

Verfahren zum Schmelzen von Glas und Glasschmelzofen
zur Durchführung dieses Verfahrens

Die Erfindung betrifft ein Verfahren zum Schmelzen von Glas, bei welchem Gemenge auf ein Glasbad aufgegeben wird und aufschmilzt, dann das Glas geläutert und homogenisiert und danach durch einen Auslaß abgezogen wird, sowie einen Glasschmelzofen zur Durchführung dieses Verfahrens, bestehend aus von einer Stahlrohrverankerung gehaltenem Feuerfestmaterial, wobei der Ofen einen Schmelz- sowie einen Läuter- und Homogenisierungsteil ausbildet.

Aus der Literatur sind bereits Strömungswalzen bekannt, welche ihren Ausgang an der heißesten Stelle der Wanne, am sogenannten "hot spot" nehmen und welche bei konventionellen rechteckigen Wannen mit durchgehendem Boden beobachtet werden. Sie sind um so ausgeprägter, je geringer die Belastung der Wannen ist. Bei den heutigen hochbelasteten Glasschmelzwannen mit spez. Belastungen um 3 to/m$^2$ sind diese Strömungsbilder nur noch bedingt gültig, da die stärkere Entnahmeströmung mit zunehmender spez. Belastung mehr und mehr dominiert, d. h. die Strömungswalzen werden verkleinert und verschwinden bei sehr hoher Belastung fast vollständig.

Die Entnahmeströmung einer Schmelzwanne nimmt je nach Belastung etwa 20 - 30 % der Badtiefe über dem Boden der Schmelzwanne ihren Anfang, in einem Bereich, in dem also das Glas zum Teil noch nicht geläutert ist. Die Entnahmeströmung läuft dann mit zunehmender Geschwindigkeit in Richtung Durchfluß. ohne noch einmal thermisch beeinflußt zu werden.

Verbesserungen wurden z. B. gemäß der DE-PS 25 39 355 erreicht durch den Einbau eines Walls, der diese Strömung zwingt, über den Wall zu steigen und damit das Glas in einen Teil des Glasbades bringt, die der Oberflächenstrahlung mehr zugänglich ist. Eine weitere Verbesserung wurde gemäß der genannten DE-PS durch ein erhebliches Vertiefen des Läuterteils erreicht, was dazu geführt hat, daß die Entnahmeströmung von der Oberkante des Walls nicht mehr gerade zum Durchfluß hindurchzieht, weil die bestehenden Temperatur- und Dichtedifferenzen eine solche Strömung nicht mehr zulassen. Werden jedoch diese Wannen höher belastet als 4 to/m$^2$, dann tritt auch hier ein Durchgehen der Entnahmeströmung in Richtung Durchfluß ein.

Höhere Belastungen der Wannen können nur noch erzielt werden, wenn es gelingt, die minimale Durchlaufzeit erheblich zu verlängern, d. h. dafür zu sorgen, daß keine durchgehende Strömung in der Wanne existiert, und wenn die Differenz zwischen der minimalen Durchlaufzeit und der maximalen Durchlaufzeit so gering wie möglich wird.

Aufgabe der Erfindung ist es also, eine Schmelzwanne zum Erschmelzen von Qualitätsglas zu schaffen, die gegenüber bekannten Wannen eine größere spezifische Leistung und einen geringeren Energieverbrauch aufweist, die eine verbesserte Standzeit (Betriebsdauer) besitzt und die einfach und wirtschaftlich aufgebaut werden kann. Die Wanne gemäß der Erfindung soll auch in Kombination von fossiler und elektrischer Energie betreibbar sein und dort die günstigsten Verhältnisse ausnutzen können. Insbesondere soll der Energieverbrauch pro kg erzeugten Glas gesenkt und die Qualität des erzeugten Glases verbessert werden. Diese Aufgabe wird erfindungsgemäß dadurch gelöst, daß in der Schmelzzone des Glasbades vorwiegend vertikale Umlaufströmungen eingestellt werden und das Glas vor der Läuterung in einer Schicht geringer Tiefe von der Schmelzzone in die Läuterzone einströmt

Konstruktiv wird die erfindungsgemäße Aufgabe bei dem eingangs genannten Glasschmelzofen dadurch gelöst, daß der Wannenboden zwischen dem Schmelzteil und dem Läuter- und Homogenisierungsteil einen Flachteil aufweist, in dem der Boden bis nahe an die Badoberfläche hochgezogen ist.

Erfindungswesentlich zur Lösung der erfindungsgemäßen Aufgabe ist es weiterhin, daß der Boden des Schmelzteils mit einem Schrägteil zum Flachteil übergeht, wobei der Boden des Schmelzteils an dem flachteilfernen Ende einen weiteren Schrägteil aufweisen kann. Der Boden des Schmelzteils kann entweder aus einem einzigen, zum Flachteil aufsteigenden oder dieses ausbildenden Schrägteils oder aus zwei Schrägteilen bestehen, die an der tiefsten Stelle des Bodens ineinander übergehen oder zwischen sich einen waagerechten Bodenteil ausbilden.

Vorteilhaft verläuft die schmelzteilnahe Wand des Läuter- und Homogenisierungsteils von dem Flachteil zu dem Boden des Läuter- und Homogenisierungsteils ebenfalls schräg, aber steiler als der Schrägteil des Schmelzteils. Aus konstruktiven Gründen können weiterhin die Schrägteile des Schmelz- und des Läuter- und Homogenisierungsteils miteinander einen Winkel $\alpha = 90^\circ$ bilden, wobei die Steine des Feuerfestmaterials der beiden Schrägteile rechtwinklig zueinander angeordnet sein können und die Stahlrohrverankerung im Bereich des Flachteils einen Festpunkt ausbildet.

Im folgenden werden Ausführungsbeispiele der Erfindung anhand von Zeichnungen näher beschrieben. Es zeigen:

Figur 1 schematisch den Längsschnitt durch einen Ofen gemäß der Erfindung mit einem flachen Bodenteil des Schmelzteils,

Figur 2 den Schnitt gemäß Figur 1 eines Ofens mit einem Boden des Schmelzteils, bei dem zwei Schrägen ineinander übergehen,

Figur 3 einen Längsschnitt durch einen Glasschmelzofen mit einem Schmelzteil mit einem einheitlichen, schrägen Boden und

Figur 4 den Übergang der das Flachteil bildenden Schrägen ineinander unter Angabe einzelner Blöcke des Feuerfestmaterials und des Festpunktes der Stahlverankerung.

Bei der erfindungsgemäßen Konzeption wird durch die Gestaltung des Bodens und der Badtiefe bei den Wannen auch bei höheren Belastungen eine Strömung erzwungen, die zu sehr langen minimalen Durchlaufzeiten führt. Eine durchgehende Entnahmeströmung wird bis zu wesentlich höheren spez. Tonnageleistungen sicher vermieden. Durch die Form der Schmelzwanne mit dem schräg abfallenden Boden zum Schmelzteil gelingt es, eine natürliche Strömung zu erzeugen, die der Entnahmeströmung genau entgegengesetzt ist. Durch das Beheizen der flachesten Stelle der Wanne mit Oberflächenheizung entsteht hier ein massiver breiter Quellpunkt, der einerseits eine durchgehende Strömung verhindert, zum anderen auch das Glas in diesem Bereich so stark aufheizt, daß es bei Erreichen des tiefen Läuterteils eine Temperatur besitzt, die mindestens so hoch ist wie im Läuterteil selbst.

Beim Eintritt in den Läuterteil sinkt das Glas deswegen nicht ab, sodaß es im gesamten Läuterteil, mit Ausnahme der durch die Elektroden erzeugten Strömungen, zu einer gleichmäßigen Kolbenströmung in Richtung Durchfluß kommt. In diesem Fall ist es vorteilhaft, die Elektroden in der Läuterzone nur mit soviel Leistung zu beaufschlagen, als erforderlich ist, um die Eintrittstemperatur in den Durchfluß auf dem optimalen Wert zu halten.

Durch die dadurch ermöglichte Absenkung der Temperatur im Durchflußeintritt ergeben sich drei erhebliche Vorteile: Zum ersten verbleibt ein Großteil der Energie, welche bei den heutigen Konstruktionen im Arbeitswannen- und Speisebereich durch Kühlen abgebaut werden muß, in der Schmelzwanne, zweitens werden die Standzeiten der Durchflüsse erheblich länger, so daß sie nicht mehr länger einen Schwachpunkt in der Konstruktion bilden und drittens ist es möglich, die nachgeschalteten Speiservorherde mit einem erheblich besseren Wirkungsgrad und niedrigerem Energieverbrauch zu betreiben, da die Glastemperatur gerade so eingestellt werden kann, daß ohne Energiezugabe oder verstärkte Energieentnahme durch Kühlung die richtige Temperatur am Tropfpunkt des Speiservorherdes erreicht wird.

Vorteilhafterweise wird die Badtiefe im Schmelzteil gegenüber den jetzt bekannten Wannen vergrößert, weil dadurch die fallende Strömung über den schräg abfallenden Boden verstärkt wird, und es ergibt sich dadurch ein größeres Volumen im Schmelzteil, was dazu führt, daß in Verbindung mit starken vertikalen Umwälzströmungen erhebliche Gemengepartien in größere Badtiefen absinken und dort aufschmelzen, sodaß die Gesamtschmelzleistung vergrößert wird. Bei den konventionellen Bauweisen war eine Vergrößerung der Badtiefe nicht mehr möglich, weil das dort entstehende kalte Bodenglas mit der Entnahmeströmung in den Durchfluß gelangen konnte. Diese Gefahr besteht bei der Konstrutkion gemäß der Erfindung nicht mehr.

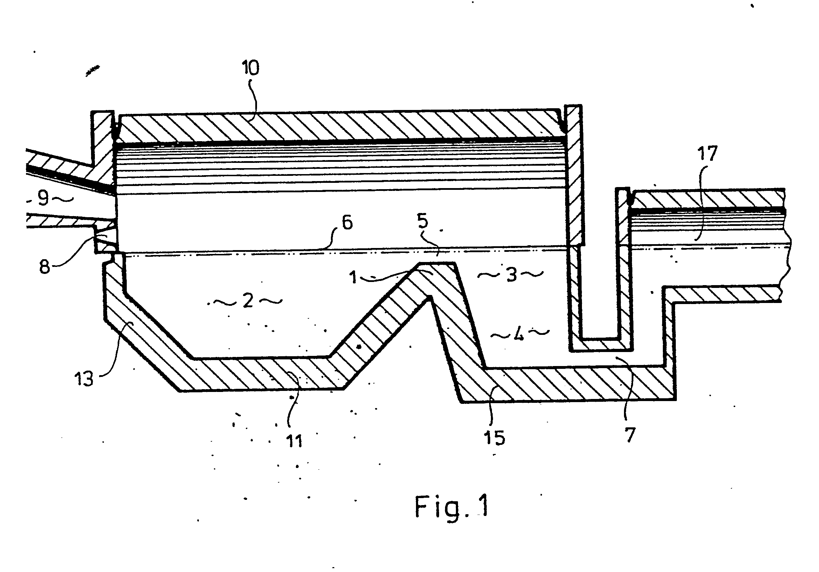

Der erfindungsgemäße Ofen besitzt einen Boden mit einem Teil 1, dessen Ränder beidseitig von schrägen Wänden oder Bodenteilen 12 und 14 gebildet werden. Das Schrägteil 12 ist Teil des Bodens des Schmelzteils 2, wobei sich gemäß Figur 1 an das untere Ende des Teils 12 ein waagerechtes Bodenteil 11 und daran ein schräg nach oben führendes Bodenteil 13 anschließt.

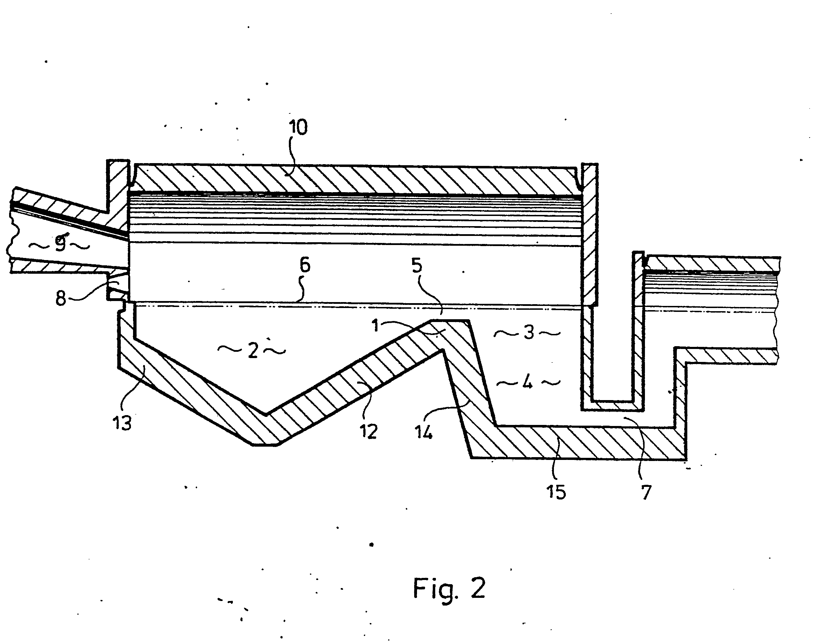

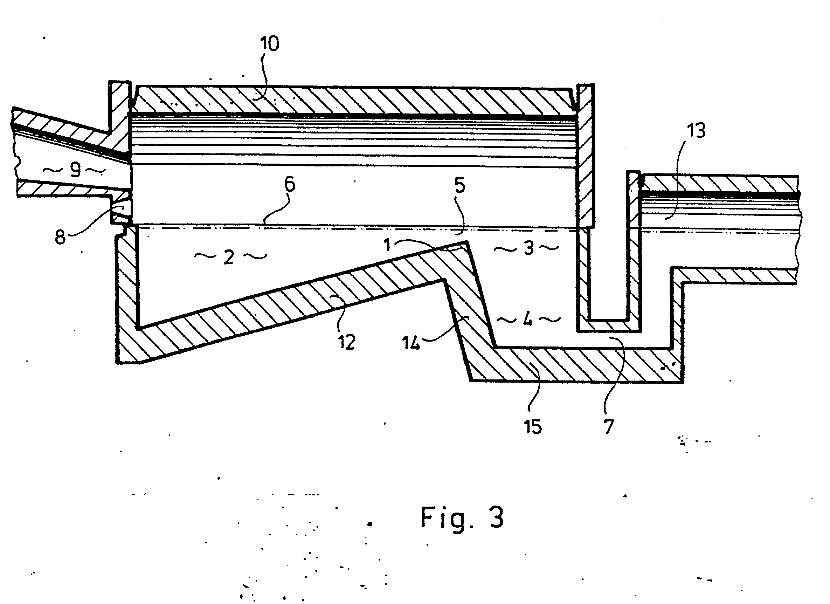

Gemäß Figur 2 können die Schrägteile 12 und 13 direkt an der tiefsten Stelle des Schmelzteils 2 ineinander übergehen und gemäß Figur 3 kann der Boden auch nur aus dem Boden des Schrägteils 12 bestehen, welches im Flachteil 5 der Schmelze mit einem Winkel $\alpha = 90^{\circ}$ in den Schrägteil bzw. die schräge Wand 14 des Läuterteils 3 und des darunter angeordneten Homogenisierungsteils 4 übergehen kann. Das Homogenisierungsteil 4 weist einen waagerechten Boden 15 auf, der in ungefähr der Höhe des waagerechten Bodenteils 11 des Schmelzteils angeordnet ist und das Glas strömt homogenisiert und auf die gewünschte Temperatur eingestellt vom Homogenisierungsteil 4 in den Speiser 17 durch einen Durchfluß 7.

Der erfindungsgemäße Ofen besteht im wesentliche in bekannter Weise aus Feuerfestmaterial, welches von einer Stahlverankerung 16 gehalten wird. Der Ofen wird nach oben von einem Gewölbe 10 abgeschlossen, das Gemenge wird in den Schmelzteil 2 seitlich durch einen Gemengevorbau 9 eingegeben. Die Brenner 8 sind in bekannter Weise wie bei U-Flammen-Wanne, seitenbeheizten Regenerativ-Wannen oder Rekoparativ-Wannen angeordnet.

Neben den Mitteln zur Zuführung thermischer konventioneller Energie sind innerhalb des Läuterteils 3 in bekannter Weise nicht gezeigte Elektroden zur Zuführung elektrischer Energie angeordnet. Aufgrund dieser Aufteilung kann vorteilhaft eine gewünschte Verteilung der Energie zwischen konventionell-thermischer und elektrischer vorgenommen werden.

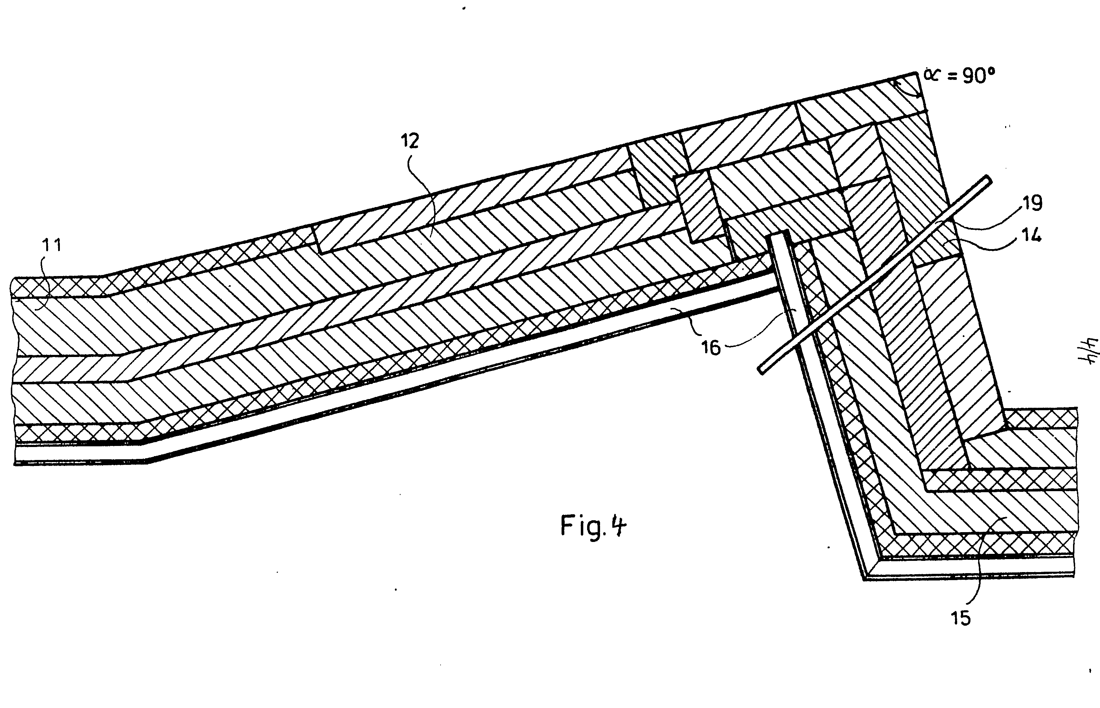

Gemäß Figur 4 können vorteilhafter Weise die mit ihrer Spitze den Flachteil 5 nach unten begrenzenden schrägen Bodenteile oder Wände 12 und 14 direkt ineinander übergehen und bilden dabei gegeneinander einen Winkel $\alpha = 90°$. Dieser Winkel ermöglicht es, daß die einzelnen Blöcke des Feuerfestmaterials sich gegeneinander nur entlang der Fugen verschieben und daß keine Winkelverwerfungen auftreten. Die Steine gleiten also aneinander vorbei und da das Gerüst 16 unterhalb des Zusammentreffens der genannten Wände 12 und 14 einen Festpunkt bildet, erden die auftretenden Längenänderungen beim Anheizen des Ofens jeweils gradlinig abgeführt. Es ist in diesem Zusammenhang besonders vorteilhaft, daß im Bereich der höchsten Stelle des Flachteils 5 besonders viel hochwertiges Feuerfestmaterial vorliegt und hier eine Abnutzung durch den Glasstrom dadurch, daß hier eine sehr hohe oder die höchste Temperatur im Ofen vorliegt, in Kauf genommen werden kann.

Das rücklaufende, schräge Bodenteil 12 des Schmelzteils 2 gewährleistet dabei eine längere Zeit zur Erhitzung des Glases und es wird ausgeschlossen, daß sich vor dem Flachteil 5 eine Kaltgalstasche bildet. Die durch Bildung des Flachteils gegebene Korrision kann durch entsprechende konstruktive Maßnahmen, wie genannt, aufgefangen werden und die Ausbildung des Flachteils 5 weist weiterhin den Vorteil auf, daß auch in der Wand 14 Elektroden zur Beheizung des Läuterteils eingesetzt werden können.

Die erfindungsgemäße Ofengestaltung gewährleistet, daß zum einen im Schmelzteil die erforderlichen vertikalen Umwelzströmungen vorliegen und daß zum anderen im Flachteil und im Läuterteil eine Läuterung des Glases vorgenommen wird, wobei dann im Homogenisierungsteil eine Temperaturherabsetzung im gewünschten Maße bei Ausbildung einer reinen Kolbenströmung möglich ist. Durch das Hochziehen des Flachteils wird dabei erreicht, daß das Läuter- und Homogenisierungsteil 3 und 4 relativ hoch angeordnet werden können und in einer günstigen Ausgestaltung des Ofens (Gebäudehöhe) liegen die Böden des Schmelzteils und des Läuter- und Homogenisierungsteils in etwa auf einer gleichen Höhe.

Der erfindungsgemäße Ofen ermöglicht eine Verringerung des Energiebedarfs beim Schmelzen von Qualitätsglas, durch seine hohe spezifische Leistung sind nur relativ geringe wirtschaftliche Investitionen erforderlich und es kann also von einer idealen Lösung der anstehenden Probleme gesprochen werden.

Durch das Hindurchleiten von Luft mittels im Boden des Schmelzteils 11 angeordneten Mitteln für das Einleiten von in der Schmelze aufsteigender Luft bzw. von Luftblasen wird eine intensive Rührung und Durchmischung der Schmelze im Schmelzteil erreicht. Die Wirkung der vertikalen Umwälzströmungen wird dadurch vorteilhaft verbessert und vergrößert. Es ergibt sich daraus eine sehr hohe spezifische Leistung des Schmelzteils sowohl bei konventionell-thermischer als auch bei elektrischer Beheizung.

Um die erforderliche hohe spezifische Leistung zu erreichen, bedeckt das Gemenge das gesamte Glasbad, also auch oberhalb des Läuter- und Homogenisierungsteils. Durch die beschriebene Temperatureinstellung innerhalb des Bades wird dabei sichergestellt, daß ungeläutertes Glas nicht in die Homogenisierungszone absinken kann, d. h. es wird nur geläutertes Glas, welches entsprechend homogenisiert wurde, dem Ausfluß zugeführt. Der Hauptanteil des Aufschmelzens erfolgt dabei in dem Schmelzteil, wobei in dem Flachteil bereits sichergestellt wird, daß ein überwiegender Anteil des geschmolzenen Glases der Läuterzone mit einer Temperatur zugeführt wird, welcher bereits der Läutertemperatur entspricht oder dieser nahe kommt. Die spezifische Leistung gemessen an der Ofengröße ist daher auch für den Fachmann überraschend groß, wobei dadurch eine überraschende Verringerung der benötigten Energie für die Glasherstellung erfolgt.

**0086859**

<u>P a t e n t a n s p r ü c h e :</u>

1. Verfahren zum Schmelzen von Glas, bei welchem Gemenge auf ein Glasbad aufgegeben wird und aufschmilzt, dann das Glas geläutert und homogenisiert und danach durch einen Auslaß abgezogen wird, dadurch gekennzeichnet, daß in der Schmelzzone des Glasbades vorwiegend vertikale Umlaufströmungen eingestellt werden und das Glas in einer Schicht geringer Tiefe von der Schmelzzone in die Läuterzone strömt, wobei der Boden des Schmelzteils dabei so ausgebildet ist, daß sich über ihn eine Strömung ausbildet, die der Entnahmeströmung entgegengesetzt ist.

2. Verfahren nach Anspruch 1, dadurch gekennzeichnet, daß in der Schmelzzone des Glasbades dieses von Luftblasen umgerührt wird.

3. Glasschmelzofen zur Durchführung des Verfahrens nach Anspruch 1 oder 2, bestehend aus von einer Stahlverankerung gehaltenem Feuerfestmaterial, wobei der Ofen einen Schmelz- sowie einen Läuter- und Homogenisierungsteil bildet, dadurch gekennzeichent, daß der Wannenboden zwischen dem Schmelzteil (2) und dem Läuter- und Homogenisierungsteil (3, 4) einen Flachteil (5) aufweist, in dem der Boden (1) bis nahe an die Badoberfläche hochgezogen ist.

4. Glasschmelzofen nach Anspruch 3, dadurch gekennzeichnet, daß der Boden (11) des Schmelzteils (2) mit einem Schrägteil (12) zum Flachteil (1) übergeht.

5. Glasschmelzofen nach Anspruch 3 oder 4, dadurch gekennzeichnet, daß der Boden (11) des Schmelzteils (2) an dem flachteilfernen Ende einen weiteren Schrägteil (13) aufweist.

6. Glasschmelzofen nach einem der Ansprüche 3 bis 5, dadurch gekennzeichnet, daß die beiden Schrägteile (12, 13) an der tiefsten Stelle des Bodens (11) ineinander übergehen (Figur 2).

7. Glasschmelzofen nach Anspruch 5, dadurch gekennzeichnet, daß zwischen den beiden Schrägteilen (12, 13) ein waagerechtes Bodenteil angeordnet ist.

8. Glasschmelzofen nach Anspruch 3 oder 4, dadurch gekennzeichnet, daß der Boden des Schmelzteiles (2) aus einem Schrägteil (12) besteht, dessen läuter- und homogenisierungsteilnahes Ende den Flachteil (5) bildet.

9. Glasschmelzofen nach einem der Ansprüche 3 bis 8, dadurch gekennzeichnet, daß die schmelzteilnahe Wand (14) des Läuter- und Homogenisierungsteiles (3, 4) von dem Flachteil (5) zu dem Boden (15) des Läuter- und Homogenisierungsteils (3, 4) steiler verläuft, als der Schrägteil (12) des Schmelzteils (2).

10. Glasschmelzofen nach einem der Ansprüche 3 bis 9, dadurch gekennzeichnet, daß die Schrägteile (12, 13) des Schmelz- und des Läuter- und Homogenisierungsteils (2, 3, 4) miteinander einen Winkel $\alpha = 90^\circ$ bilden.

11. Glasschmelzofen nach einem der Ansprüche 3 bis 10, dadurch gekennzeichnet, daß die Stahlverankerung im Bereich des Flachteils (5) einen Festpunkt bildet und daß die Steine des Feuerfestmaterials der beiden zum Flachteil (5) führenden Schrägteile (12, 14) rechtwinklig zueinander angeordnet sind.

12. Glasschmelzofen nach einem der Ansprüche 3 bis 11,

**0086859**

dadurch gekennzeichnet, daß die größte Badtiefe des Schmelz- und des Läuter- und Homogenisierungsteils (2, 3, 4) ungefähr gleich ist.

13. Glasschmelzofen nach einem der Ansprüche 3 bis 12, dadurch gekennzeichnet, daß im Boden des Schmelzteils (2) Mittel für das Einleiten von in der Schmelze aufsteigenden Luftblasen vorhanden sind.

Fig. 1

Fig. 2

Fig. 3

Fig. 4

α = 90°

11 12 19 14 16 15

4/4

## EINSCHLÄGIGE DOKUMENTE

| Kategorie | Kennzeichnung des Dokuments mit Angabe, soweit erforderlich, der maßgeblichen Teile | betrifft Anspruch | KLASSIFIKATION DER ANMELDUNG (Int. Cl.³) |
|---|---|---|---|
| A | US - A - 3 532 483 (J. CARDOT) <br> * Spalte 4, Zeilen 35 bis 37, 62 bis 66; Spalte 5, Zeilen 5 bis 14; Fig. 1 * <br> & DE - A - 1 254 297 <br> -- | 1-3,12, 13 | C 03 B 5/18 <br> C 03 B 5/193 <br> C 03 B 5/225 <br> C 03 B 5/00 |
| A | US - A - 2 975 224 (O.G. BURCH) <br> * Ansprüche 1, 3 bis 13; Fig. 6, 15, 16 * <br> -- | 1-3,12, 13 | |
| A | US - A - 1 944 855 (H.A. WADMAN) <br> * Ansprüche 1, 3, 5 bis 8, 10, 11; Fig. 1, 2 * <br> -- | 1,3-5, 7-9,12 | **RECHERCHIERTE SACHGEBIETE (Int. Cl.³)** |
| A | US - A - 2 068 925 (V. MULHOLLAND) <br> * Ansprüche 1 bis 3, 14; Fig. 1, 4 * <br> ---- | 1,3,4, 8,12 | C 03 B 5/00 |

**KATEGORIE DER GENANNTEN DOKUMENTE**

X: von besonderer Bedeutung allein betrachtet
Y: von besonderer Bedeutung in Verbindung mit einer anderen Veröffentlichung derselben Kategorie
A: technologischer Hintergrund
O: nichtschriftliche Offenbarung
P: Zwischenliteratur
T: der Erfindung zugrunde liegende Theorien oder Grundsätze
E: älteres Patentdokument, das jedoch erst am oder nach dem Anmeldedatum veröffentlicht worden ist
D: in der Anmeldung angeführtes Dokument
L: aus andern Gründen angeführtes Dokument

&: Mitglied der gleichen Patentfamilie, übereinstimmendes Dokument

| X | Der vorliegende Recherchenbericht wurde für alle Patentansprüche erstellt. |
|---|---|

| Recherchenort | Abschlußdatum der Recherche | Prüfer |
|---|---|---|
| Berlin | 30-09-1982 | STROUD |

EPA form 1503.1   06.78